# EUROPEAN PATENT SPECIFICATION

(11) **EP 0 720 966 B1**
(45) Date of publication and mention of the grant of the patent: **11.08.1999**
(21) Application number: 95309337.4
(22) Date of filing: 21.12.1995
(51) Int. Cl.: C01B 31/20, F25J 3/08, C12F 3/02

(54) **Recovery of carbon dioxide**
Rückgewinnung von Kohlendioxid
Récupération de dioxyde de carbone

(30) Priority: 05.01.1995 GB 9500114
(43) Date of publication of application: 10.07.1996
(73) Proprietor: MESSER UK LIMITED, Reigate, Surrey RH2 9QE (GB)
(72) Inventor: Cockerill, Peter E., Warninglid, West Sussex RH17 5ST (GB)
(74) Representative: Rackham, Stephen Neil

(56) References cited:
- EP-A- 0 194 795
- WO-A-92/07933
- US-A- 4 460 395
- JOURNAL OF AMERICAN SOCIETY OF BREWING CHEMISTS, vol. 39, no. 4, 1981 pages 131-135, MORRISON N. & AL. 'Assay and control of dimethyl sulfide in brewery carbon dioxide'

## Description

Waste gases are released during fermentation processes, the majority of which being carbon dioxide formed during the conversion of sugars into alcohol. Carbon dioxide recovered from such fermentation processes constitutes a significant proportion of that sold commercially both in the United Kingdom and in other countries. The carbon dioxide includes a number of impurities, one of which is dimethylsulphide. Dimethylsulphide is a significant flavouring component in beers and presents a serious problem for an engineer attempting to recover and purify the carbon dioxide element of the waste gases. Some fermentation processes tend to be longer, cooler and use dried malt rather than green malt. Especially with these, dimethylsulphide represents a significant impurity in the waste products which must be removed in any carbon dioxide recovery process.

Traditional methods of removing odour from the gaseous waste products of fermentation processes are not particularly reliable with respect to dimethylsulphide. Adsorption of dimethylsulphide on activated carbon, for example, is unreliable since dimethylsulphide previously adsorbed can be released with only minor changes in pressure and temperature conditions.

A more recent proposal is described in a paper given at the EBC Congress 1993 entitled "Improved CO₂ Purification System" by P.W. Van Oeveren, of Heineken Technical Services B.V. and in W092/07933. These describe a process for removing dimethylsulphide from gaseous carbon dioxide which utilises a wet oxidation technique. In this process, a partially purified gaseous mixture of carbon dioxide and dimethylsulphide is brought into contact with a stream of water containing an oxidizing agent such as sodium hypochlorite. Any hydrogen sulphide is oxidized to hydrogen sulphate and dimethylsulphide is oxidised to dimethylsulphoxide. Both these reaction products are water soluble and so form an effluent. The recovered carbon dioxide is substantially free of dimethylsulphide. Whilst this essentially chemical purification step is successful in removing dimethylsulphide, the cost is substantial due to the volume of oxidising agent required and the subsequent neutralisation and disposal of the effluent.

US-A-4460395 describes a process for extracting carbon dioxide from a supply of natural gas. Whilst natural gas from some sources may contain significant amounts of carbon dioxide, when viewed as a source of carbon dioxide, it contains a very much greater concentration of impurities than does any supply of carbon dioxide resulting from fermentation. The process described in this patent thus describes a process for treating an impure carbon dioxide gas stream derived from natural gas or the like which contains contaminants including light and heavy hydrocarbons (at least C₁ to C₃) and light sulfur compounds such as hydrogen sulfide and carbonyl sulfide as well as heavier sulfur constituents in the nature of mercaptans (RSH) and/or organic mono and disulfides (RSR and RSSR). Water is generally present in varying amounts in the impure feed stream and is produced during practice of the process. Nitrogen and oxygen are introduced into the stream during processing, depending on the source of O₂ used and this must be removed before transmission of the final food grade product to storage or use. As part of this process the impure feed stream is first subjected to a fractionation step wherein a part of the feed gas is condensed and the resulting liquid caused to flow in countercurrent relationship to incoming impure gas to be purified. Heavy hydrocarbons and heavy sulfur compounds are dissolved in a liquid carbon dioxide reflux stream so that the overhead from the fractionation step is substantially free of heavy sulfur materials and C₃ + hydrocarbons.

According to a first aspect of the present invention, a method of recovering carbon dioxide from a gaseous mixture of carbon dioxide and dimethylsulphide resulting from fermentation comprises the steps of contacting the gaseous mixture with liquid carbon dioxide derived from the gaseous mixture to preferentially dissolve dimethylsulphide in the liquid carbon dioxide, recovering the gaseous carbon dioxide substantially free of dimethylsulphide and condensing at least part of it to provide the liquid carbon dioxide for contacting the gaseous mixture, collecting the solution of dimethylsulphide in liquid carbon dioxide, vaporising the solution of dimethylsulphide in liquid carbon dioxide, and venting the vaporised mixture to the atmosphere.

According to a second aspect of the present invention, an apparatus for recovering carbon dioxide from a gaseous mixture of carbon dioxide and dimethylsulphide comprises:
a distillation column including a desuperheating section, the gaseous mixture being arranged to pass upwardly through the distillation column while liquid carbon dioxide derived from the gaseous mixture is arranged to flow downwardly through the distillation column to contact the flow of the gaseous mixture with liquid carbon dioxide and collect a solution of dimethylsulphide dissolved in liquid carbon dioxide resulting from this contact;
means for collecting carbon dioxide substantially free of dimethylsulphide and condensing at least part of this to provide the liquid carbon dioxide fed to the distillation column,
an outlet at the base of the distillation column operatively connected to a vaporiser which, in turn, is operatively connected to a vent outlet to enable the solution of dimethylsulphide in liquid carbon dioxide to be withdrawn from the bottom of the distillation column through the outlet and vaporised before being exhausted to atmosphere.

In the present invention, dimethylsulphide is preferentially dissolved out of the mixture of gaseous carbon dioxide and dimethylsulphide when the mixture contacts liquid carbon dioxide, to form a solution of dimethylsulphide in liquid carbon dioxide and to effectively scrub the gaseous carbon dioxide free of dimethylsulphide.

Preferably, the apparatus comprises an enclosed distillation column filled with a high efficiency structural packing material. This material presents a large surface area to the gas mixture as it passes through the distillation column. Preferably, the distillation column is arranged as a tailing column.

Preferably, a liquid carbon dioxide inlet is provided in an upper region of the distillation column and is arranged to spray liquid carbon dioxide from the liquid carbon dioxide supply over the structural packing material.

Preferably, a sump is provided in a lower region of the distillation column and is arranged to collect a solution of dimethylsulphide in liquid carbon dioxide.

The sump preferably includes an outlet valve for bleeding off the collected dimethylsulphide solution. Preferably, the apparatus further comprises a solution level sensor which controls the supply of liquid carbon dioxide to maintain a pre-determined level of liquid carbon dioxide in the sump.

Typically the carbon dioxide vented to the atmosphere may typically contain 14 ppm of dimethylsulphide whilst the mixture of gas entering the system may typically contain only 1 ppm of dimethylsulphide. Typically, the mixture of gaseous carbon dioxide and dimethylsulphide is at a temperature above its condensing temperature for a given pressure of the system. The desuperheating section of the distillation column reduces the mixture to its condensation temperature.

The present invention is suitable for retro-fitting to existing carbon dioxide plants. The process is relatively cheap to operate and is easily automated. The only effluent in the present invention is a more highly concentrated mixture of carbon dioxide gas and dimethylsulphide.

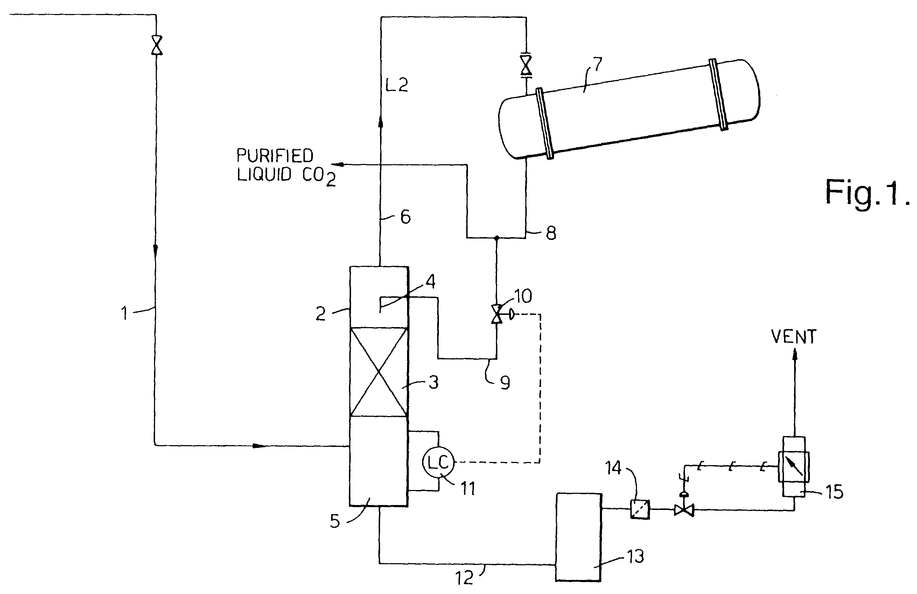

The present invention will now be described with reference to Figure 1 which shows an apparatus for the removal of dimethylsulphide from carbon dioxide in a fermentation gas recovery system.

In Figure 1, a compressed mixture of carbon dioxide and dimethylsulphide at a pressure of around 19 bar (280 psi) which has previously passed through a number of purification stages, passes via line 1 into a distillation column 2 of a type known as a tailing column at a level below a bed of mass transfer packing 3. The mass transfer packing 3 comprises high efficiency structural packing.

Liquid carbon dioxide is directed onto the mass transfer bed 3 via a liquid carbon dioxide inlet 4. Liquid carbon dioxide passes through the mass transfer bed 3 and collects in a sump 5 in the base of the distillation column. An exhaust line 6 connects the top of the distillation column to a carbon dioxide condenser 7. The condenser 7 is connected via a line 8, line 9 and valve 10 to the liquid carbon dioxide inlet 4. A level controller 11 operates the valve 10 to ensure that a pre-determined level of liquid carbon dioxide is maintained in the sump 5 of the distillation column 2.

The base of the distillation column 2 is connected via a line 12 to a vaporiser 13, which in turn is vented to atmosphere via a filter 14 and flow rate controller 15.

In use, as the mixture of carbon dioxide and dimethylsulphide passes up the distillation column 2, liquid carbon dioxide passes down the distillation column 2 through the mass transfer packing 3 and any dimethylsulphide present in the gaseous mixture is condensed out to form a solution of dimethylsulphide in liquid carbon dioxide. Accordingly, any dimethylsulphide present in the gas mixture is dissolved and collects in the sump 5 of the distillation column 2 and carbon dioxide gas substantially free of dimethylsulphide leaves the top of the distillation column 2 via exhaust line 6.

The purified carbon dioxide gas is condensed in the condenser 7 to form liquid carbon dioxide, a portion of which is used to supply the distillation column 2 via valve 10, line 9 and inlet 4, whilst the remainder is passed on to the next stage of the process via line 8.

The solution of dimethylsulphide in carbon dioxide is removed from the system by taking a bleed from the sump 5 at the bottom of the distillation column 2 via line 12. For practical purposes, the solution is vaporised in the vaporiser 13 and then leaves the system via the filter 14 and the flow controller 15 to atmosphere.

The mixture of carbon dioxide and dimethylsulphide entering the system via pipe 1 is usually at a temperature above its condensing temperature for the pressure of the system. The distillation column 2 is provided with a desuperheating section comprising an additional lower section of structural packing material.

The system may be run continuously during the fermentation process to collect and purify carbon dioxide produced during the conversion of sugars to ethanol. This system can be fully automated and requires no other chemicals. Neither are any products produced which require disposal.

## Claims

1. An apparatus for recovering carbon dioxide from a gaseous mixture of carbon dioxide and dimethylsulphide comprising:
a distillation column (2) including a desuperheating section, the gaseous mixture being arranged to pass upwardly through the distillation column (2) while liquid carbon dioxide derived from the gaseous mixture is arranged to flow downwardly through the distillation column (2) to contact the flow of the gaseous mixture with liquid carbon dioxide and collect a solution of dimethylsulphide dissolved in liquid carbon dioxide resulting from this contact;
means (7) for collecting carbon dioxide substantially free of dimethylsulphide and condensing at least part of this to provide the liquid carbon dioxide fed to the distillation column (2), and
an outlet (12) at the base of the distillation column (2) operatively connected to a vaporiser (13) which, in turn, is operatively connected to a vent outlet to enable the solution of dimethylsulphide in liquid carbon dioxide to be withdrawn from the bottom of the distillation column (2) through the outlet (12) and vaporised before being exhausted to atmosphere.

2. An apparatus according to claim 1, in which the distillation column (2) is filled with a high efficiency structural packing material.

3. An apparatus according to claim 2, in which a liquid carbon dioxide inlet (4) is provided in an upper region of the distillation column (2) and is arranged to spray liquid carbon dioxide over the structural packing material (3).

4. An apparatus according to any one of the preceding claims, in which the distillation column (2) is arranged as a tailing column.

5. An apparatus according to any one of the preceding claims, in which a sump (5) is provided in a lower region of the distillation column (2) and is arranged to collect the solution of dimethylsulphide in liquid carbon dioxide.

6. An apparatus according to claim 5, further comprising a level sensor (11) which controls the supply of liquid carbon dioxide to maintain a pre-determined level of liquid carbon dioxide in the sump (5).

7. A method of recovering carbon dioxide from a gaseous mixture of carbon dioxide and dimethylsulphide resulting from fermentation comprising the steps of contacting the gaseous mixture with liquid carbon dioxide derived from the gaseous mixture to preferentially dissolve dimethylsulphide in the liquid carbon dioxide, recovering the gaseous carbon dioxide substantially free of dimethylsulphide and condensing at least part of it to provide the liquid carbon dioxide for contacting the gaseous mixture, collecting the solution of dimethylsulphide in liquid carbon dioxide, vaporising the solution of dimethylsulphide in liquid carbon dioxide, and venting the vaporised mixture to the atmosphere.

8. A method according to claim 7, in which the gaseous mixture is arranged to pass upwardly through a distillation column (2) including a desuperheating section while liquid carbon dioxide is arranged to flow downwardly through the distillation column in the contacting step.

## Patentansprüche

1. Vorrichtung zur Rückgewinnung von Kohlendioxid aus einem gasförmigen Gemisch von Kohlendioxid und Dimethylsulfid, umfassend:
eine Destillationssäule (2), einschließlich einen Heißdampfabkühlungsabschnitt, wobei das gasförmige Gemisch nach oben durch die Desillationssäule (2) hindurch verläuft, während flüssiges Kohlendioxid, das vom Gemisch stammt, nach unten durch die Destillationssäule (2) fließt, um den Strom des gasförmigen Gemisches mit flüssigem Kohlendioxid zu berühren und eine Lösung von Dimethylsulfid, das in flüssigem Kohlendioxid aufgelöst ist, welches aus diesem Kontakt resultiert, zu sammeln;
Mittel (7) zum Sammeln des im wesentlichen von Dimethylsulfid freien Kohlendioxids, und Kondensieren mindestens eines Teiles davon, um das der Destillationssäule (2) zugeführte Kohlendioxid, und einen Auslaß (12) an der Basis der Destillationssäule (2) vorzusehen, die betriebsmäßig mit einem Verdampfer (13) verbunden ist, der wiederum betriebsmäßig mit einem Entlüftungsauslaß verbunden ist, um der Lösung des Dimethylsulfids im flüssigen Kohlendioxid zu ermöglichen, daß sie vom Boden der Destillationssäule (2) durch den Auslaß (12) abgezogen und verdampft werden kann, bevor es an die Atmosphäre abgegeben wird.

2. Vorrichtung nach Anspruch 1, bei der die Destillationssäule (2) mit einem hochwirksamen strukturellen Packungsmaterial gefüllt ist.

3. Vorrichtung nach Anspruch 2, bei der ein flüssiger Kohlendioxideinlaß (4) in einem oberen Bereich der Destillationssäule (2) vorgesehen und angeordnet ist, um flüssiges Kohlendioxid über das strukturelle Packungsmaterial (3) zu versprühen.

4. Vorrichtung nach irgendeinem der vorstehenden Ansprüche, bei der die Destillationssäule (2) als sogenannte Tailing- oder Rückstandssäule angeordnet ist.

5. Vorrichtung nach irgendeinem der vorstehenden Ansprüche, bei der ein Sumpf (5) in einem unteren Bereich der Destillationssäule (2) vorgesehen und angeordnet ist, um die Lösung von Dimethylsulfid im flüssigen Kohlendioxid zu sammeln.

6. Vorrichtung nach Anspruch 5, ferner umfassend einen Niveausensor (11), der den Nachschub an flüssigem Kohlendioxid steuert, um ein vorbestimmtes Niveau an flüssigem Kohlendioxid im Sumpf (5) aufrecht zu erhalten.

7. Verfahren zur Wiedergewinnung von Kohlendioxid aus einem gasförmigen Gemisch von Kohlendioxid und Dimethylsulfid, die bei der Fermentation entstehen, umfassend folgende Stufen:
Inkontaktbringen des gasförmigen Gemisches mit dem flüssigen Kohlendioxid, das aus dem gasförmigen Gemisch stammt, um vorzugsweise Dimethylsulfid im flüssigen Kohlendioxid aufzulösen,
Wiedergewinnen des gasförmigen Kohlendioxids, im wesentlichen frei von Dimethylsulfid und Kondensieren mindestens eines Teiles davon, um das flüssige Kohlendioxid zum Inkontaktbringen mit dem gasförmigen Gemisch vorzusehen,
Auffangen der Lösung von Dimethylsulfid im flüssigen Kohlendioxid,
Verdampfen der Lösung von Dimethylsulfid im flüssigen Kohlendioxid und Ablassen des verdampften Gemisches an die Atmosphäre.

8. Verfahren nach Anspruch 7, bei dem das gasförmige Gemisch nach oben durch eine Destillationssäule (2) verläuft, einschließlich eines Reißdampfabkühlungsabschnittes, während das flüssige Kohlendioxid nach unten durch die Destillationssäule in die Kontaktstufe strömt.

## Revendications

1. Appareil pour la récupération de dioxyde de carbone d'un mélange gazeux de dioxyde de carbone et de sulfure de diméthyle comprenant :
une colonne de distillation (2) comprenant une section de désurchauffe, le mélange gazeux traversant la colonne de distillation (2) de bas en haut alors que le dioxyde de carbone liquide provenant du mélange gazeux traverse la colonne de distillation (2) de haut en bas pour qu'il y ait contact entre le courant de mélange gazeux et le dioxyde de carbone liquide et que l'on recueille une solution de sulfure de diméthyle dissoute dans du dioxyde de carbone liquide provenant de ce contact ;
un moyen (7) de recueil de dioxyde de carbone pratiquement exempt de sulfure de diméthyle et de condensation d'au moins une partie de celui-ci pour donner du dioxyde de carbone liquide qui alimente la colonne de distillation (2) et
un dispositif de sortie (12) à la base de la colonne de distillation (2) relié fonctionnellement à un vaporisateur (13) lequel est, à son tour, relié fonctionnellement à un dispositif de sortie avec mise à l'air libre pour pouvoir soutirer la solution de sulfure de diméthyle dans le dioxyde de carbone liquide de la partie inférieure de la colonne de distillation (2) par l'intermédiaire du dispositif de sortie (12) et la vaporiser avant qu'elle ne se dégage dans l'atmosphère.

2. Appareil selon la revendication 1, dans lequel la colonne de distillation (2) est garnie d'un matériau de remplissage structural de grande efficacité.

3. Appareil selon la revendication 2, dans lequel une admission de dioxyde de carbone liquide (4) est ménagée dans la région supérieure de la colonne de distillation (2) et est disposée de telle façon que le dioxyde de carbone liquide soit pulvérisé sur le matériau de remplissage structural (3).

4. Appareil selon une quelconque des revendications précédentes, dans lequel la colonne de distillation (2) est conçue comme une colonne de formation de queues.

5. Appareil selon une quelconque des revendications précédentes, dans lequel un bassin de réception (5) est ménagé dans la partie inférieure de la colonne de distillation (2) et est disposé de telle façon qu'il recueille la solution de sulfure de diméthyle dans du dioxyde de carbone liquide.

6. Appareil selon la revendication 5, comprenant en outre un détecteur de niveau (11) qui commande l'admission du dioxyde de carbone liquide de façon à ce qu'un niveau prédéfini de dioxyde de carbone liquide soit maintenu dans le bassin de réception (5).

7. Méthode de récupération de dioxyde de carbone d'un mélange gazeux de dioxyde de carbone et de sulfure de diméthyle résultant d'une fermentation comprenant les étapes de la mise en contact du mélange gazeux avec du dioxyde de carbone liquide provenant du mélange gazeux pour que le sulfure de diméthyle se dissolve préférentiellement dans le dioxyde de carbone liquide, de la récupération de dioxyde de carbone gazeux pratiquement exempt de sulfure de diméthyle et de la condensation d'au moins une partie de ce dioxyde de carbone pour fournir le dioxyde de carbone liquide à mettre en contact avec le mélange gazeux, du recueil de la solution de sulfure de diméthyle dans du dioxyde de carbone liquide, de la vaporisation de la solution de sulfure de diméthyle dans du dioxyde de carbone liquide et du dégagement du mélange vaporisé dans l'atmosphère.

8. Méthode selon la revendication 7, dans laquelle on fait passer le mélange gazeux de bas en haut au travers d'une colonne de distillation (2) comprenant une section de désurchauffe tandis que l'on fait circuler le dioxyde de carbone liquide de haut en bas dans la colonne de distillation, dans l'étape de mise en contact.
